# DEMANDE DE BREVET EUROPEEN

(11) **EP 1 693 236 A1**
(43) Date de publication de la demande: **23.08.2006**
(21) Numéro de dépôt: 06290277.0
(22) Date de dépôt: 17.02.2006
(51) Int. Cl.: B60J 7/14, B60J 7/12

(54) **Véhicule automobile comprenant un toit escamotable et des vitres latérales mobiles par rapport au dit toit lors du mouvement du toit**

(30) Priorité: 17.02.2005 FR 0501637; 13.12.2005 FR 0553847
(71) Demandeur: Heuliez, 79140 Cerizay (FR)
(72) Inventeur: Quéveau, Gérard, 79140 Le Pin (FR); Guillez, Jean-Marc, 79140 Cirières (FR); Quéveau, Paul, 79140 Montravers (FR)
(74) Mandataire: Breese Derambure Majerowicz

(57) **Abrégé**

L'invention concerne un véhicule automobile (1) équipé d'un toit escamotable comprenant au moins un élément de toit avant (2) et un élément de toit arrière (3), mobile entre une position de recouvrement dans laquelle il recouvre l'habitacle du véhicule (1) et une position escamotée dans le coffre (4) du véhicule (1).

Le véhicule comprend :
- deux vitres latérales (5) articulées par rapport à l'élément de toit arrière (3) le long des bords latéraux de l'élément de toit arrière (3), entre une position déployée et une position rangée, et
- au moins un dispositif de transmission (6, 6') du mouvement du toit à une desdites vitres latérales (5) permettant de façon réversible le mouvement de la vitre latérale (5) de sa position déployée vers sa position rangée lors du déplacement du toit vers sa position escamotée et de sa position rangée vers sa position déployée lors du déplacement du toit vers sa position de recouvrement.

## Description

L'invention concerne un véhicule automobile équipé d'un toit escamotable possédant au moins un élément de toit arrière, mobile entre une position de recouvrement de l'habitacle et une position escamotée dans le coffre du véhicule.

Dans l'art antérieur, les véhicules de ce type sont équipés de vitres latérales montées mobiles sur le châssis du véhicule au moyen d'un mécanisme lève-vitre.

Cependant, les mécanismes lève-vitres sont composés de nombreux éléments et sont par conséquent coûteux. En effet, les mécanismes lève-vitres nécessitent un actionneur manuel ou électrique (moteur), des rails de guidage, des câbles de transmission du mouvement. De plus, les mécanismes lève-vitres doivent être installés à l'intérieur des ailes latérales du véhicule ce qui nécessite des opérations de montage supplémentaires complexes et coûteuses. Enfin, lorsque le mécanisme lève vitre est électrique, le véhicule doit être équipé d'une unité de contrôle et de commande du mouvement des vitres.

L'invention vise à remédier à ces problèmes en proposant un véhicule équipé d'un toit escamotable, de vitres latérales articulées sur l'élément de toit arrière et d'un dispositif de transmission du mouvement du toit escamotable aux vitres latérales.

En d'autres termes, l'invention propose un véhicule équipé d'un dispositif de transmission du mouvement du toit escamotable aux vitres latérales.

A cet effet, et selon un premier aspect, l'invention propose un véhicule automobile équipé d'un toit escamotable comprenant au moins un élément de toit avant et un élément de toit arrière, mobile entre une position de recouvrement dans laquelle il recouvre l'habitacle du véhicule et une position escamotée dans le coffre du véhicule, ledit élément de toit arrière étant monté en rotation sur le châssis du véhicule autour d'un premier axe A et possédant deux bords latéraux et ledit élément de toit avant étant monté en rotation sur l'élément de toit arrière autour d'un second axe B.

Le véhicule comprend :
- deux vitres latérales articulées par rapport à l'élément de toit arrière le long desdits bords latéraux de l'élément de toit arrière, entre une position déployée et une position rangée, et
- au moins un dispositif de transmission du mouvement du toit à une desdites vitres latérales permettant de façon réversible le mouvement de la vitre latérale de sa position déployée vers sa position rangée lors du déplacement du toit vers sa position escamotée et de sa position rangée vers sa position déployée lors du déplacement du toit vers sa position de recouvrement.

Le dispositif de transmission est agencé de manière à ce que la rotation de l'élément de toit avant ou de l'élément de toit arrière respectivement autour du premier A ou du second axe B entraîne le mouvement de ladite vitre latérale.

Ainsi, le dispositif d'actionnement des vitres latérales est simple est peu coûteux car il ne nécessite pas d'actionneurs dédiés aux vitres latérales.

Dans un premier mode de réalisation de l'invention, le dispositif de transmission comprend :
- une came solidaire du châssis du véhicule,
- et un suiveur de came solidaire de la vitre latérale, ledit suiveur de came étant guidé sur la came afin de piloter le déplacement de la vitre latérale entre sa position déployée et sa position rangée.

Ainsi, le pivotement de la vitre latérale peut être discontinu afin d'éviter des interférences avec des éléments du véhicule (bras d'articulation , châssis, ...).

Dans un second mode de réalisation, le dispositif de transmission est un dispositif de renvoi d'angle agencé de manière à ce que la rotation de l'élément de toit avant ou de l'élément de toit arrière respectivement autour du premier axe A ou du second axe B entraîne une rotation de la vitre latérale autour d'un axe F.

Dans un mode de réalisation de l'invention, les vitres latérales sont montées articulées par rapport à l'élément de toit arrière au moyen d'un joint déformable solidaire dudit élément de toit arrière et le joint déformable est un joint étanche permettant de réaliser l'étanchéité entre la vitre latérale et l'élément de toit arrière.

Ainsi, l'articulation des vitres latérales sur l'élément de toit arrière est réalisée de manière simple et étanche.

D'autres objets et avantages de l'invention apparaîtront au cours de la description qui suit, faite en référence aux dessins annexés, dans lesquels :
- la figure 1 est une représentation schématique de trois quart arrière en perspective d'un toit d'un véhicule automobile selon l'invention ;
- la figure 2 est une vue latérale d'un véhicule selon un premier mode de réalisation de l'invention, représentant le toit et les vitres latérales dans différentes positions ;
- la figure 3 est une représentation partielle schématique d'un toit, d'une vitre latérale et d'un dispositif de transmission du mouvement du toit à la vitre latérale selon le premier mode de réalisation de l'invention ;
- la figure 4 est une vue en coupe de la figure 3 selon l'axe IV-IV, représentant le dispositif de transmission du mouvement et une vitre latérale en position rangée et en position déployée ;
- la figure 5 est une vue en coupe selon l'axe V-V de la figure 3 représentant la vitre latérale et le dispositif de transmission du mouvement selon le premier mode de réalisation de l'invention ;
- La figure 6 est une vue latérale d'un véhicule selon un second mode de réalisation de l'invention, représentant le toit en position de recouvrement et les vitres latérales en position déployée ;
- La figure 7 est une vue latérale de l'arrière d'un véhicule selon le second mode de réalisation de l'invention représentant le toit escamotable dans une position intermédiaire et dans sa position escamotée.
- La figure 8 est une vue en coupe selon l'axe VIII-VIII de la figure 6 ;
- La figure 9 est une vue en coupe selon l'axe IX-IX de la figure 6 ; et
- La figure 10 est une vue en coupe selon l'axe X-X de la figure 7.

Le véhicule automobile 1 selon l'invention est équipé d'un toit escamotable mobile entre une position de recouvrement dans laquelle il recouvre l'habitacle du véhicule 1 et une position escamotée dans le coffre 4 du véhicule 1.

Le toit escamotable selon l'invention comprend au moins un élément de toit avant 2 et au moins un élément de toit arrière 3.

L'élément de toit arrière 3 est monté en rotation sur le châssis 8 du véhicule 1 selon un premier axe A et monté articulé par rapport à l'élément de toit avant 2 selon un deuxième axe B. Un bras d'articulation 15 du toit est monté d'une part articulé sur l'élément de toit avant 2 selon l'axe C et d'autre part sur le châssis 8 du véhicule 1 selon l'axe D. Les axes A, B, C et D forment un quadrilatère déformable permettant le déplacement du toit. L'élément de toit avant 2 se replie sur l'élément de toit arrière 3 lorsque le toit est dans sa position escamotée.

Dans le mode de réalisation représenté, l'élément de toit arrière 3 est porté par deux bras latéraux 16, 16' montés articulés sur le châssis du véhicule selon l'axe A.

On remarquera que l'invention ne se limite pas au type de toit escamotable représenté.

Dans un mode de réalisation non représenté, le toit escamotable comprend un élément de toit avant 2, deux éléments arrière latéraux et un panneau central articulé sur l'élément de toit avant 2.

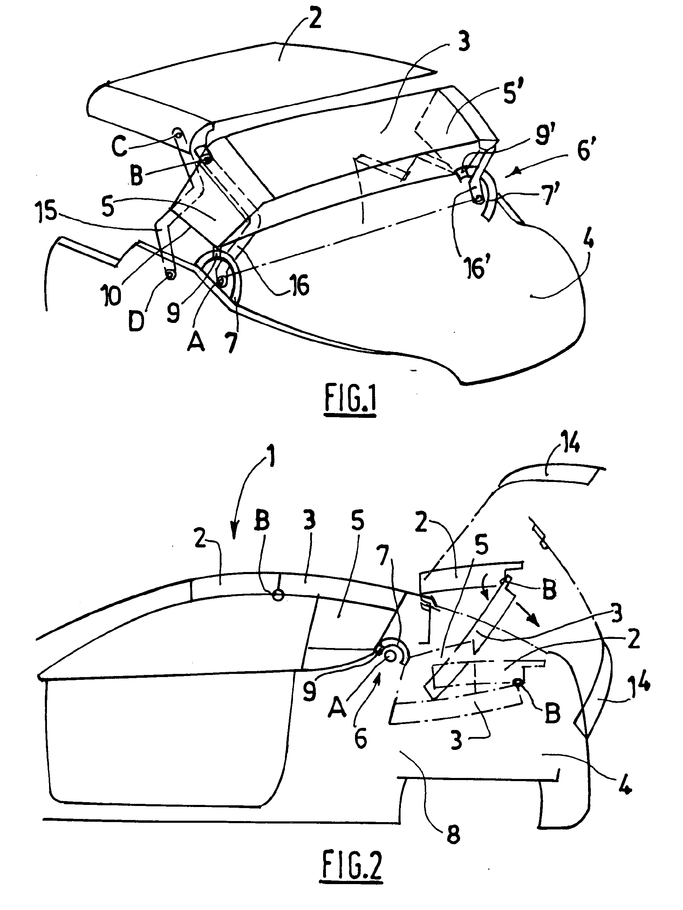

Tel que représenté sur la figure 2, le véhicule est équipé d'un couvercle 14 de coffre 4 possédant deux axes d'articulation. Le couvercle 14 s'ouvre de l'avant vers l'arrière pour le passage des éléments de toit 2, 3 et de l'arrière vers l'avant pour l'accès à l'espace de rangement des bagages.

Deux vitres latérales 5, 5' sont disposées aux extrémités latérales de l'élément de toit arrière 3. Lorsque le toit est en position de recouvrement, l'élément de toit arrière 3 définit avec le châssis 8 un logement pour chaque vitre latérale 5, 5'.

Les vitres latérales 5, 5' sont montées mobiles par rapport à l'élément de toit arrière 3 entre une position déployée et une position rangée. Avantageusement, les vitres latérale 5, 5' sont articulées sur l'élément de toit arrière 3 selon un axe de pivotement F s'étendant sensiblement dans un plan longitudinal du véhicule 1.

Un dispositif de transmission 6, 6' du mouvement du toit à la vitre latérale 5, 5' est agencé pour permettre de façon réversible le mouvement de la vitre latérale 5, 5' de sa position déployée vers sa position rangée lors du déplacement du toit vers sa position escamotée et de sa position rangée vers sa position déployée lors du déplacement du toit vers sa position de recouvrement.

Avantageusement, le véhicule 1 est composé de deux dispositifs de transmission 6, 6' symétriques, cependant, nous ne détaillerons ici que le fonctionnement d'un dispositif de transmission.

Selon le mode de réalisation détaillée sur les figures 1 à 5, le dispositif de transmission 6, 6' comprend une came 7, 7' et un suiveur de came solidaire 9, 9' de la vitre latérale 5, 5'. Le suiveur de came 9, 9' est guidé sur la came 7, 7' afin de piloter le déplacement de la vitre latérale 5, 5' entre sa position déployée et sa position rangée lors du mouvement du toit.

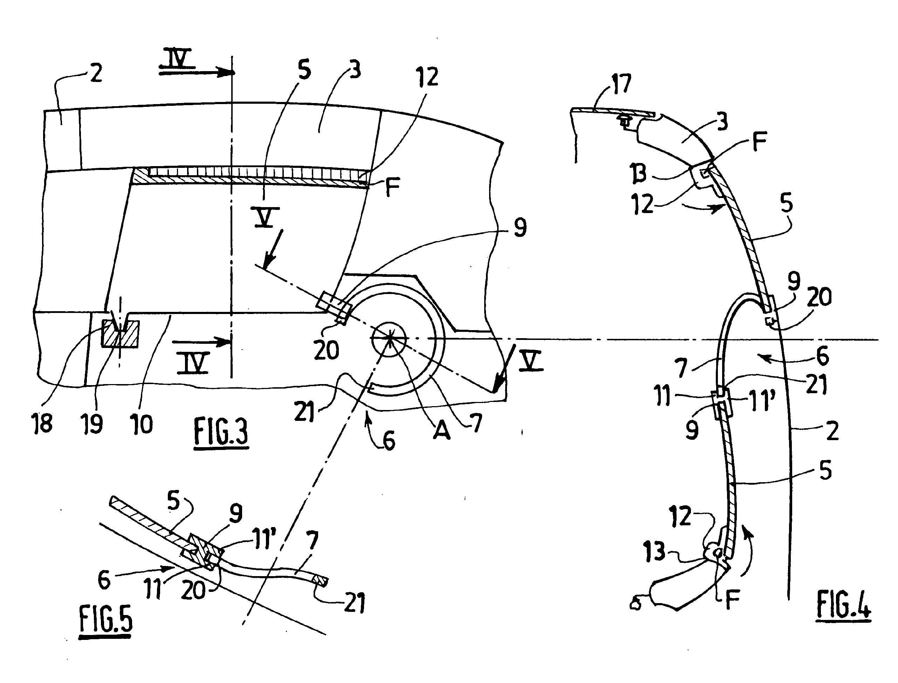

La largeur du toit est généralement inférieure à la largeur du véhicule 1 au niveau de l'extrémité inférieure des vitres latérales 5, 5' (voir figure 4). Ainsi, lorsque les vitres latérales 5, 5' sont dans leur position déployée, l'extrémité inférieure des vitres 5, 5' s'étend vers l'extérieur du véhicule 1.

Cependant, la largeur de l'espace de rangement des éléments de toit 2, 3 dans le coffre 4 est généralement inférieure à la largeur du véhicule 1 au niveau de l'arrière de l'habitacle. Par conséquent, il est nécessaire que les vitres latérales 5, 5' s'étendent de façon moindre vers l'extérieur du véhicule lorsqu'elles sont dans leur position rangée. À cet effet, le profil de la came 7, 7' est agencé pour permettre le déplacement de l'extrémité inférieure 10 de la vitre latérale 5, 5' vers l'intérieur du véhicule 1 lors du déplacement de la vitre 5, 5' vers sa position rangée et vers l'extérieur du véhicule 1 lors du déplacement de la vitre 5, 5' vers sa position déployée.

La came 7, 7', représenté sur les figures 3, 4 et 5, est une bandelette solidaire du châssis 8 du véhicule 1 et forme sensiblement un hélicoïde dont le centre A est l'axe de rotation de l'élément de toit arrière 3 sur le châssis 8 du véhicule 1.

L'extrémité initiale 20 de la came 7, 7', correspondant à la position de l'élément de guidage 9, 9' lorsque la vitre 5 est dans sa position déployée, s'étend vers l'extérieur du véhicule par rapport à l'extrémité finale 21 de la came 7, 7'.

On remarquera que la came 7, 7' peut présenter une forme particulière permettant de contourner des obstacles lors du mouvement du toit.

Le suiveur de came 9, 9' est solidaire de la vitre latérale 5 à proximité de l'axe de rotation A de l'élément de toit arrière 3 sur le châssis 8 du véhicule. Par conséquent, dans le mode de réalisation représenté, le suiveur de came 9, 9' est disposé à proximité de l'extrémité arrière inférieure de la vitre latérale 5 et peut être solidarisé à celle-ci par tout moyen et notamment par collage. Dans le mode de réalisation représenté, le suiveur de came 9, 9' possède deux branches 11, 11' disposées de part et d'autre de la came 7, 7' afin de maintenir le contact entre le suiveur de came 9, 9' et la came 7, 7'.

Dans d'autres modes de réalisation de l'invention, lorsque la vitre latérale est dans sa position rangée et le toit est dans sa position de recouvrement, la vitre est repliée entre les deux éléments de toit 2, 3. Ainsi, l'encombrement de la vitre 5, 5' lorsqu'elle est dans sa position rangée est réduit. On notera que lorsque le toit escamotable comprend deux éléments de toit arrière latéraux, les vitres latérales 5 sont disposés entre les éléments de toit arrière latéraux et l'élément de toit avant.

Les dispositifs de transmission du mouvement détaillés ci-dessous permettent notamment le mouvement de la vitre 5 vers un telle position rangée en permettent un pivotement de la vitre autour de l'axe F d'un angle compris entre 60 et 120 degrés.

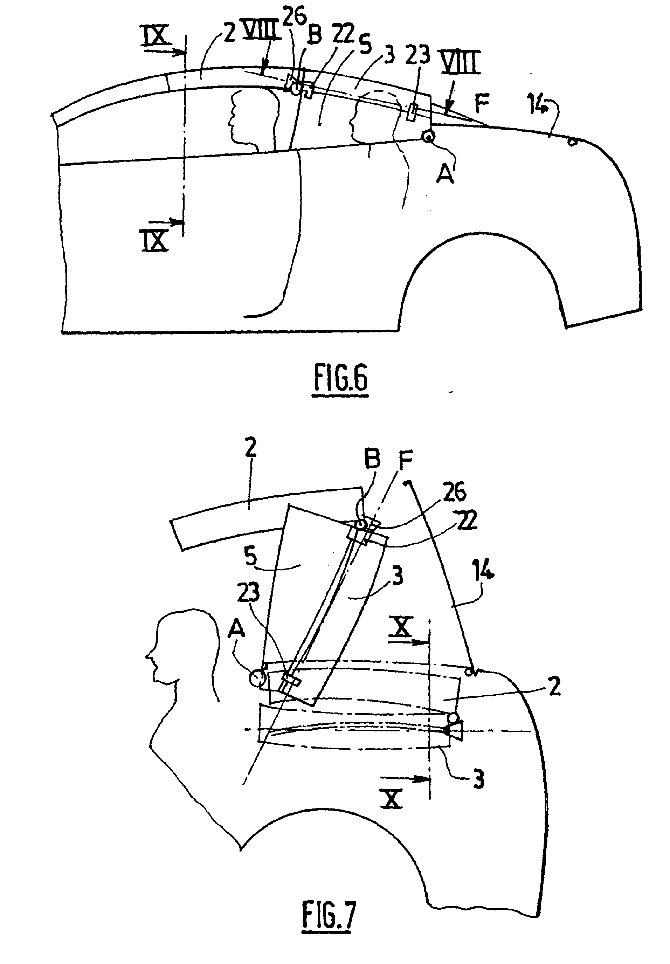

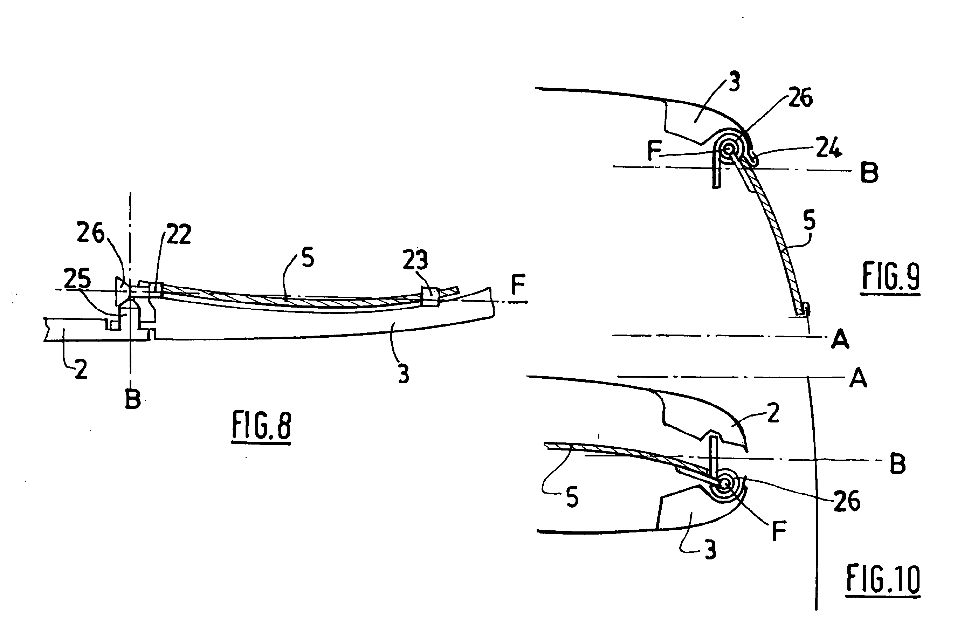

Dans le mode de réalisation représenté sur les figures 6 à 10, le dispositif de transmission est un dispositif de renvoi d'angle permettant de transmettre le mouvement de rotation de l'élément de toit avant 2 sur l'élément de toit arrière 3 ou le mouvement de rotation de l'élément de toit arrière 3 sur le châssis 8, à la vitre 5 afin de permettre son pivotement autour de l'axe F.

Le dispositif de renvoi d'angle est composé de deux pignons crantés coniques 25, 26. Le premier pignon 25 est solidaire de l'élément de toit avant 2 et colinéaire à l'axe B. Le second pignon 26 est solidaire de la vitre latérale 5 et colinéaire à l'axe de rotation F de la vitre 5. Les pignons 25, 26 sont concourants et les crans desdits pignons 25, 26 coopèrent.

Dans un mode de réalisation non représenté, le premier pignon est solidaire du châssis 8 du véhicule 1 et colinéaire à l'axe de rotation A et le second pignon est disposé solidaire de la vitre latérale 5 colinéaire à l'axe de rotation F de la vitre 5.

Dans un autre mode de réalisation non représenté, le dispositif de renvoi d'angle comprend un ou plusieurs câbles solidaires de l'élément de toit avant 2 d'une part et de la vitre latérale 5. Dans le cas d'un câble de traction ,on utilisera au moins une poulie de renvoi et un moyen de rappel élastique de la vitre latérale 5. Lorsqu'on utilise plusieurs câbles, on n'utilise pas de moyens de rappel élastique. Un premier câble permettant d'entraîner la vitre latérale 5 vers sa position déployée et un second câble permettent d'entraîner la vitre dans sa position rangée. L'utilisation d'un seul câble de traction/poussée est avantageuse et permet d'éviter l'utilisation d'un moyen de rappel élastique.

Ce mode de réalisation est particulièrement intéressant lorsque les axes de rotation A et/ou B sont éloignés de l'axe F de pivotement de la vitre. Ainsi, le mouvement de l'élément avant 2 par rapport à l'élément arrière 3 entraîne le mouvement de la vitre 5. Dans un autre mode de réalisation, le câble est monté d'une part solidaire du châssis 8 du véhicule 1 et d'autre part solidaire de la vitre latérale 5. Ainsi, le mouvement de l'élément de toit arrière 3 sur le châssis 8 entraîne le mouvement de la vitre latérale 5.

Dans un autre mode de réalisation, le dispositif de transmission du mouvement est composé d'un suiveur de came solidaire de la vitre latérale 5 et d'une came solidaire de l'élément de toit avant 2 ou du châssis 8. Le suiveur de came est mobile sur la came.

Dans un autre mode de réalisation, le dispositif de transmission du mouvement est composé d'un suiveur de came solidaire de la vitre latérale 5 et d'une came solidaire de l'élément de toit avant 2 ou du châssis 8. Le suiveur de came est mobile sur la came. Ainsi, la rotation de la vitre latérale peut être contrôlé de manière plus précise afin notamment d'éviter des interférences avec des éléments du véhicule (bras d'articulation du toit, châssis, élément de toit) ou avec les passagers. En effet, ce dispositif de transmission permet un mouvement discontinu de la vitre 5.

Enfin, dans un autre configuration, le dispositif de transmission du mouvement est composé d'une bielle montée d'une part articulée sur l'élément de toit avant 2 ou sur le châssis 8 du véhicule 1 et d'autre part sur la vitre latérale 5. La bielle est par exemple montée articulée au moyen d'articulation du type rotule.

Dans un mode de réalisation représenté sur les figures 6 à 10, la vitre latérale 5 est montée articulée sur l'élément de toit arrière 3 au moyen de charnières 22, 23 et l'extrémité intérieure supérieure de la vitre 5 est en contact avec un joint d'étanchéité 24.

Dans le mode de réalisation représenté sur les figures 1 à 5, la vitre latérale 5 est montée articulée par rapport à l'élément de toit arrière 3 au moyen d'un joint déformable 12 solidaire dudit élément de toit arrière 3. Le joint déformable 12 est un joint étanche permettant de réaliser l'étanchéité entre la vitre latérale 5 et l'élément de toit arrière 3. Ainsi, l'articulation de la vitre latérale 5 sur l'élément de toit arrière 3 est réalisée de manière simple et étanche.

Le joint déformable 12 est solidarisé à l'élément de toit arrière 3 et à la vitre latérale 5 par tout moyen possible et notamment par collage. Dans un mode de réalisation non représenté, l'élément de toit arrière 3 possède sur son bord inférieur une saillie et le joint 12 possède une cavité engagée sur cette saillie. La vitre latérale 5 est par exemple collée sur le joint déformable 12.

Le joint déformable 12 est disposé dans un plan sensiblement longitudinale au véhicule 1 sur le bord inférieur 13 de l'élément de toit arrière 3. Avantageusement, le joint déformable 12 possède une cavité s'étendant sur la longueur du joint déformable 12.

On remarquera que l'utilisation d'une articulation du type « joint déformable » ou du type « charnière » est indépendante du dispositif de transmission utilisée.

On remarquera également que, dans des modes réalisation de l'invention, la largeur du véhicule est plus importante au niveau du bord avant de la vitre latérale 5 qu'au niveau de son bord arrière. Par conséquent, le joint déformable 12 peut être légèrement incliné par rapport au plan longitudinal du véhicule.

Avantageusement, le véhicule 1 possède des moyens de positionnement de la vitre latérale 5 sur le châssis 8 du véhicule 1.

Dans le mode de réalisation représenté sur la figure 3, les moyens de positionnement sont composés d'au moins un doigt de positionnement 18 solidaire de la vitre latérale 5 et d'une cavité 19 du châssis 8. La cavité 19 est de forme complémentaire audit doigt de positionnement 18. Le doigt de positionnement 18 s'engage dans la cavité 19 lors du mouvement du toit vers sa position de recouvrement et lors du mouvement de la vitre 5 vers sa position déployée. Lorsque la vitre est bien positionnée dans sa position déployée, le doigt 18 est associé avec la cavité 19.

Avantageusement, le doigt de positionnement 18 ou la cavité 18 possède une partie de forme sphérique ou conique.

On remarquera que, dans un autre mode de réalisation non représenté, le doigt de positionnement 18 est solidaire du châssis 8 et la vitre latérale 5 porte une cavité 19 de forme complémentaire audit doigt 18.

## Revendications

1. Véhicule automobile (1) équipé d'un toit escamotable comprenant au moins un élément de toit avant (2) et un élément de toit arrière (3), mobile entre une position de recouvrement dans laquelle il recouvre l'habitacle du véhicule (1) et une position escamotée dans le coffre (4) du véhicule (1), ledit élément de toit arrière (3) étant monté en rotation sur le châssis du véhicule (1) autour d'un premier axe A et possédant deux bords latéraux et ledit élément de toit avant (2) étant monté en rotation sur l'élément de toit arrière (3) autour d'un second axe B ; ledit véhicule étant **caractérisé en ce qu'**il comprend :
- deux vitres latérales (5) articulées par rapport à l'élément de toit arrière (3) le long desdits bords latéraux de l'élément de toit arrière (3), entre une position déployée et une position rangée, et
- au moins un dispositif de transmission (6, 6') du mouvement du toit à une desdites vitres latérales (5) permettant de façon réversible le mouvement de la vitre latérale (5) de sa position déployée vers sa position rangée lors du déplacement du toit vers sa position escamotée et de sa position rangée vers sa position déployée lors du déplacement du toit vers sa position de recouvrement ;
ledit dispositif de transmission (6, 6') étant agencé de manière à ce que la rotation de l'élément de toit avant (2) ou de l'élément de toit arrière (3) respectivement autour du premier A ou du second axe B entraîne le mouvement de ladite vitre latérale (5).

2. Véhicule automobile selon la revendication 1, **caractérisé en ce que** le dispositif de transmission comprend :
- une came (7, 7') solidaire du châssis (8) du véhicule (1),
- et un suiveur de came (9, 9') solidaire de la vitre latérale (5), ledit suiveur de came (9, 9') étant guidé sur la came (7, 7') afin de piloter le déplacement de la vitre latérale (5) entre sa position déployée et sa position rangée.

3. Véhicule automobile (1) selon la revendication 2, **caractérisé en ce que** la came (7, 7') possède un profil agencé pour permettre le déplacement de l'extrémité inférieure (10) de la vitre latérale (5) vers l'intérieur du véhicule (1) lors du déplacement de la vitre (5) vers sa position rangée et vers l'extérieur du véhicule (1) lors du déplacement de la vitre (5) vers sa position déployée.

4. Véhicule automobile (1) selon la revendication 2 ou 3, **caractérisé en ce que** l'élément de toit arrière (3) est monté en rotation sur le châssis (8) du véhicule (1) selon un premier axe A, la came (7, 7') formant sensiblement une hélicoïde de centre A.

5. Véhicule automobile (1) selon l'une des revendications 2 à 4, **caractérisé en ce que** le suiveur de came (9, 9') est disposé à proximité de l'extrémité arrière inférieure de la vitre latérale(5).

6. Véhicule automobile (1) selon l'une des revendications 2 à 5, **caractérisé en ce que** le suiveur de came (9, 9') possède deux branches (11, 11') disposées de part et d'autre de la came (7, 7') afin de maintenir le contact entre le suiveur de came(9, 9') et la came (7, 7').

7. Véhicule automobile (1) selon la revendication 1, **caractérisé en ce que** les vitres latérales (5, 5') sont disposées entre l'élément de toit avant (2) et l'élément de toit arrière (3) lorsque elle sont dans leur position rangée.

8. Véhicule automobile (1) selon la revendication 1 ou 7, **caractérisé en ce que** le dispositif de transmission est un dispositif de renvoi d'angle agencé de manière à ce que la rotation de l'élément de toit avant (2) ou de l'élément de toit arrière (3) respectivement autour du premier axe A ou du second axe B entraîne une rotation de la vitre latérale (5) autour d'un axe F.

9. Véhicule automobile (1) selon l'une des revendications 1 à 8, **caractérisé en ce que** ladite vitre latérale (5) est montée articulée par rapport à l'élément de toit arrière (3) au moyen d'un joint déformable (12) solidaire dudit élément de toit arrière (3).

10. Véhicule automobile (1) selon la revendication 9, **caractérisé en ce que** le joint déformable (12) est un joint étanche permettant de réaliser l'étanchéité entre la vitre latérale (5) et l'élément de toit arrière (3).

11. Véhicule automobile (1) selon la revendication 9 ou 10, **caractérisé en ce que** le joint déformable (12) est disposé sur le bord inférieur (13) de l'élément de toit arrière (3).

12. Véhicule automobile (1) selon l'une des revendications 1 à 11, **caractérisé en ce qu'**il comporte des moyens de positionnement de la vitre latérale (5) sur le châssis (8) du véhicule (1).

13. Véhicule automobile (1) selon la revendication 12, **caractérisé en ce que** les moyens de positionnement de la vitre latérale (5) comprennent au moins un doigt de positionnement (18), solidaire de ladite vitre latérale (5), associé à une cavité (19) du châssis (8) de forme complémentaire audit doigt (18), lorsque la vitre (5) est dans sa position déployée.

14. Véhicule automobile (1) selon l'une des revendications 1 à 13, **caractérisé en ce qu'**il comprend, pour chaque vitre latérale (5), un dispositif de transmission (6, 6') du mouvement du toit à ladite vitre latérale (5).
